(19) Europäisches Patentamt
European Patent Office
Office européen des brevets

(11) Publication number: 0 131 657
B1

(12) # EUROPEAN PATENT SPECIFICATION

(45) Date of publication of patent specification: 04.02.87

(51) Int. Cl.$^4$: C 10 M 173/02

(21) Application number: 83303806.0

(22) Date of filing: 30.06.83

(54) **Aqueous lubricant composition.**

(43) Date of publication of application:
23.01.85 Bulletin 85/04

(45) Publication of the grant of the patent:
04.02.87 Bulletin 87/06

(84) Designated Contracting States:
DE FR GB

(56) References cited:
EP-A-0 034 132
EP-A-0 059 461
FR-A-2 182 163
GB-A-1 199 693
US-A-3 346 501

**The file contains technical information submitted after the application was filed and not included in this specification**

(73) Proprietor: NIPPON OIL AND FATS COMPANY, LIMITED
10-1, Yuraku-cho 1-chome
Chiyoda-ku Tokyo (JP)

(72) Inventor: Minagawa, Kenichiro
No. 17-13-105 Namiki 1-chome Kanazawa-ku
Yokohama-shi Kanagawa (JP)
Inventor: Furuse, Kazuo
No. 7-3 Shimoseya 1-chome Seya-ku
Yokohama-shi Kanagawa (JP)
Inventor: Tanizaki, Yoshiharu
No. 3950-9 Oya
Ebina-shi Kanagawa (JP)
Inventor: Okabe, Heihachiro
No. 2-2 Sakurajosui 2-chome Setagaya-ku
Tokyo (JP)

(74) Representative: Perry, Robert Edward et al
GILL JENNINGS & EVERY 53-64 Chancery Lane
London WC2A 1HN (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 131 657 B1

Courier Press, Leamington Spa, England.

## Description

The present invention relates to aqueous lubricant compositions.

Water-based lubricants have been widely used for, for example, hydraulic fluids, metal cutting fluids and metal working fluids, since they are of low inflammability or non-inflammable. Water-based lubricants including non-inflammable hydraulic fluids based on water/glycol, for use as cutting fluids, usually contain a water-soluble high polymer compound such as a polyether as a lubricant and a thickener, e.g. in an amount of 15 to 40% by weight. Economies in resources and energy have more recently made it desirable that an aqueous lubricant should have a higher water content. This is especially the case for non-inflammable hydraulic fluids based on water/glycol, and it is desirable that the water content should be much greater than that (about 40% by weight) of conventional water-based hydraulic fluids.

A water content of 90% by weight or more inevitably means a decreased concentration of the thickener in the hydraulic fluid, and this may prove unacceptable when using conventional thickeners. Thus, for example, a water-soluble polyether having a molecular weight below 50,000 which has been used as the thickener for non-inflammable hydraulic fluids based on water/glycol provides good mechanical shearing stress resistance, but it exhibits a low thickening effect and insufficient increase of viscosity when used in a small amount; this may result in leakage from seams of machines when used, due to the inferior lubricating power. A polyethylene oxide of high molecular weight can provide a marked thickening effect even when used in a small amount, but is liable to break down when subjected to mechanical shearing stress.

An aqueous lubricant composition according to the present invention comprises first and second polyether compounds and an amide compound, in which the first polyether compound has the formula

$$R^1Y[(C_pH_{2p}O)_a(C_2H_4O)_b(C_qH_{2q}O)_cH]_m \qquad \text{I}$$

in which $R^1$ is $C_{5-26}$ hydrocarbyl; Y is oxygen and m is one or Y is nitrogen and m is 2; p and q are each either 3 or 4; the average values a, b and c are defined by $a \geqq 0$, $b \geqq 2$, $c \geqq 0$, $2 \leqq a+b+c \leqq 200$ and $0 \leqq (a+c)/b \leqq 7/3$; and wherein the ethyleneoxy groups and any of the other alkyleneoxy groups are each added in the form of block segments;

in which the second polyether compound has the formula

$$R^2Y[\{(C_2H_4O)_d(C_pH_{2p}O)_e\}(C_qH_{2q}O)_fH]_{m\ n} \qquad \text{II}$$

in which $R^2$ represents the residue of a polyhydric alcohol, a polyhydric phenol or a polyamine having 2 to 26 carbon atoms; Y, m, p and q are as defined above; n is an integer from 2 to 8; the average values d, e and f are defined by $d>0$, $e \geqq 0$, $f>0$, $10 \leqq d+e+f \leqq 3000$, $0 \leqq e/d \leqq 1$ and $1/9 \leqq f/(d+e) \leqq 0.8$; in which the chain segment within {} is a random addition chain if e is not 0, in which the or each chain segment enclosed in [] exists in the form of addition blocks arranged in the sequence given in the formula, and in which the content of $C_{3-4}$ oxyalkylene blocks is no more than 49.6%;

and in which the amide compound has the formula

$$R^3[CONR^4—(C_rH_{2r}O)_gH]_t \qquad \text{III}$$

in which $R^3$ is hydrocarbyl derived from a $C_{8-54}$ carboxylic acid of the formula $R^3(COOH)_t$, $R^4$ is hydrogen, $C_{1-26}$ hydrocarbyl or $(C_sH_{2s}O)_hH$ and t is an integer from 1 to 5, wherein r and s are each either 2 or 3, and the average values of g and h are each from 1 to 20.

In formula I, the hydrocarbon group expressed by $R^1$ includes aliphatic (linear, cyclic and branched and saturated and unsaturated) and aromatic groups such as residues of saturated aliphatic alcohols, unsaturated aliphatic alcohols, cycloaliphatic alcohols, aromatic alcohols, alkyl-substituted phenols, alkenyl-substituted phenols, saturated aliphatic amines, unsaturated aliphatic amines, cycloaliphatic amines, aromatic amines and so on, each having 5 to 26 carbon atoms.

Examples of alcohols, phenols and amines corresponding to the residue $R^1$ include pentanol, hexanol, heptanol, octanol, nonanol, decanol, undecanol, dodecanol, tridecanol, tetradecanol, pentadecanol, hexadecanol, heptadecanol, octadecanol, nonadecanol, cyclopentanol, cyclohexanol, benzyl alcohol, cinnamyl alcohol, oleyl alcohol, octyl phenol, nonyl phenol, decylamine, dodecylamine, tridecylamine, tetradecylamine, pentadecylamine, hexadecylamine, heptadecylamine, octadecylamine, oleylamine and so on.

The alkylene oxides having 3 and 4 carbon atoms which are expressed by $C_pH_{2p}O$ and $C_qH_{2q}O$ in the above general formulae I and II include propylene oxide, butylene oxide, tetrahydrofuran and so on. They can be used alone or in combination. The symbol m represents a number of chains combined directly to Y and corresponds to 1 if Y is an oxygen atom, or corresponds to 2 if Y is a nitrogen atom. The polyethers represented by the general formula I include also those in which either one or both of a and c are zero.

The polyether compounds represented by the general formula I can be produced from a starting material consisting of one or more of alcohols, phenols and amines having hydrocarbon residues corresponding to $R^1$ by subjecting them to an addition of ethylene oxide alone or together with one or more

of said other alkylene oxides having 3 and 4 carbon atoms respectively so as to form block segments in the addition chain. The addition polymerization in a form of block segments can be carried out in any desired sequence of addition without restriction and it is even possible to carry out the addition polymerizations of them in an alternate manner. There is no restriction as to the manner of addition polymerization and it is possible to carry out the reaction, for example, in the presence of an alkali catalyst at a temperature between 60 and 180°C.

The polyhydric alcohols, polyhydric phenols and polyamines each having 2 to 26 carbon atoms corresponding to the residue $R^2$ in the above general formula II include, for example, ethylene glycol, propylene glycol, butanediol, hexylene glycol, octylene glycol, glycerin, trimethylolpropane, pentaerythritol, sorbitol, glucose, sucrose, ethyl diethanolamine, butyl diethanolamine, triethanolamine, tripropanolamine, N,N'-dinaphthyl-p-phenylenediamine, 4,4'-diaminodiphenylmethane, 4,4'-diamino-dicyclohexylmethane, ethylenediamine, diethylenetriamine, triethylenetetramine, tetraethylenepentamine, pentaethylenehexamine, bisphenol A, hydrogenated bisphenol A, 4,4'-butylidene-bis(6-tert.-butyl-3-methylphenol), 4,4'-thio-bis(6-tert.-butyl-3-methylphenol), catechol, resorcinol and so on.

The symbol n represents the number of chains directly bound to the residue $R^2$, which is the number corresponding to the valency of residue $R^2$ (from 2 to 8).

The polyether compounds expressed by the above general formula II can be obtained from a starting material consisting of a polyhydric alcohol, a polyhydric phenol or a polyamine corresponding to the residue $R^2$ by subjecting it to an addition polymerization of ethylene oxide alone or in combination with one or more of the alkylene oxides having 3 and 4 carbon atoms respectively in a random distribution and then to a further addition of one or more of the previously suggested alkylene oxides having 3 and 4 carbon atoms respectively in such a manner that they build up block segments in the addition chain.

The amide compounds expressed by the above general formula III to be employed according to the present invention are primary and secondary alkanolamides of monocarboxylic acids or polycarboxylic acids with valencies from 2 to 5, each having 8 to 54 carbon atoms. The symbol t in the general formula III represents the number corresponding to the valency of this carboxylic acid and is from 1 to 5.

Examples of these mono- and polycarboxylic acids include caprylic acid, pelargonic acid, capric acid, undecanoic acid, lauric acid, tridecanoic acid, myristic acid, pentadecanoic acid, palmitic acid, heptadecanoic acid, stearic acid, nonadecanoic acid, arachic acid, behenic acid, cerotic acid, undecylenic acid, oleic acid, elaidic acid, linolic acid, linoleic acid, dimerized or trimerized acids obtained by oligomerization of unsaturated fatty acids, azelaic acid, undecanedioic acid, dodecanedioic acid, tridecanedioic acid, pentadecanedioic acid, hexadecanedioic acid, octadecanedioic acid, eicosanedioic acid and so on.

As the primary and secondary amines to be employed to form the amido group of the general formula III, there may be enumerated, for example, monoethanolamine, diethanolamine, monopropanolamine, dipropanolamine, ethylmonoethanolamine, butylmonoethanolamine, and addition products of these obtained by adding thereto ethylene oxide and/or propylene oxide.

The amide compounds of the above general formula III can be obtained by reacting a mono- or polycarboxylic acid having 8—54 carbon atoms or an ester of such carboxylic acid with a lower alcohol, such as, methyl ester, ethyl ester, n-propyl ester, iso-propyl ester or glyceride, with equivalent or excess amount of an alkanolamine or an alkylalkanolamine mentioned above with, if necessary, adding thereon further ethylene oxide or propylene oxide.

In reacting the lower alcohol ester of said carboxylic acid with an alkanolamine using an alkali catalyst, the amide compound represented by the general formula III can be obtained in high purity by using a substantially equivalent amount of the alkanolamine, whereas in the reaction of carboxylic acid with alkanolamine, the amide compound of general formula III can only be obtained if a considerable excess of alkanolamine is used, with the amide compound obtained being contaminated by the unreacted alkanolamine. However, it is permissible to use either of the amide products in the lubricant composition according to the present invention.

As to the polyether compound expressed by the general formula I, the number of moles of addition of ethylene oxide and any other alkylene oxides is limited so as to meet the condition A+B+C=2 to 200. The influence of the hydrophobic groups of the starting compound will be too large to acquire a water-soluble property in case the above sum is less than 2 moles; conversely, if this sum exceeds 200 moles, the proportion of the starting compound in the product molecule will be too low and thus the water-solubility will become too high, resulting in loss of the thickening effect.

It is desirable to carry out the addition polymerization of ethylene oxide and other alkylene oxides having 3 and 4 carbon atoms so as to build up a block segment for each of them, because, if a random addition polymerization is employed, an adequate balance between the hydrophilic and hydrophobic groups will not be attained, so that no thickening effect is obtained.

The ratio of the moles of ethylene oxide to the moles of the other alkylene oxides having 3 and 4 carbon atoms should be at least 3/7, since otherwise the water-solubility will be reduced as and the product cannot be used; an aqueous lubricant.

The starting compound, to which alkylene oxide(s) are added, for the polyether compound expressed by the general formula I, should have at least 5 carbon atoms, because otherwise the hydrophobic property

of the starting compound is too low to reach an adequate balance between the hydrophilic and hydrophobic groups even by adding the alkylene oxide(s), so that no thickening effect is attained.

In the polyether compound represented by the general formula II, the total number of addition moles of ethylene oxide and the other alkylene oxides should be in such a range, that $d+e+f=10\sim3{,}000$, since the molecular weight will be too low to exhibit a thickening effect in case the above sum is less than 10 moles and, on the other hand, if the sum exceeds over 3,000 moles, the decrease in viscosity under mechanical shearing stress will become too intensive.

It is necessary that the ratio of $f/(d+e)$ is kept within the range from 1/9 to 7/3, since the product will no longer be suitable for use as an aqueous lubricant due to the inferior water-solubility if the said ratio exceeds the value 7/3, whereas an adequate balance between the hydrophilic and hydrophobic groups will not be achieved and no thickening effect will be obtained if the sum is less than 1/9, because the proportion of the hydrophobic part inherited from the alkylene oxide(s) in the molecular becomes too low.

In the polyether compound represented by the general formula II, it is necessary to carry out the addition polymerization of ethylene oxide as well as the other alkylene oxides in such a manner that the random addition segment or the polyethylene oxide segment within {} and the other polyalkylene oxide segment will form block segments arranged in the sequence given in [], since an adequate balance between the hydrophilic and the hydrophobic groups cannot be attained and no thickening effect is realized, if the addition polymerization is carried out in a random manner, and furthermore because a reverse sequence of the addition segments will also result in loss of the thickening effect.

In the amide compound described by the general formula III, the number of addition moles of alkylene oxide should not exceed 20 moles, since otherwise no thickening effect will be reached and the compound cannot be used for an aqueous lubricant.

Here, the number of carbon atoms in the mono- and polycarboxylic acids should be restricted within the range from 8 to 54, since no thickening effect will be realized due to too low a hydrophobic property inherited from the hydrocarbon group, if the number of carbon atoms is less than 8.

The polyether compound expressed by the general formula I, the polyether compound represented by the general formula II and the amide compound represented by the general formula III can be combined in any desired proportion in order to form an aqueous lubricant composition, by dissolving the so-formulated mixture in water. It is possible to employ one or more compounds for each of the three components of these general formulae I to III according to the present invention.

The aqueous lubricant composition according to the present invention may preferably consist of 0.1—30% by weight of the compound of general formula I, 0.1—30% by weight of the compound of general formula II, 0.1—20% by weight of the compound of general formula III and 20—99.7% by weight of water.

If a higher lubricity is required, the aqueous lubricant composition according to the present invention should preferably contain further a water-soluble compound having a number average molecular weight from 500 to 100,000. Here a preferable composition may be:

| | |
|---|---|
| Compound of general formula I | 0.1—25% by weight |
| Compound of general formula II | 0.1—25% by weight |
| Compound of general formula III | 0.1—20% by weight |
| Water-soluble compound as above | 0.1—10% by weight |
| Water | 20—99.6% by weight |

The aqueous lubricant composition according to the present invention can contain in every case 80—99% by weight of water, for a satisfactory water-based hydraulic fluid.

For the above-mentioned water soluble compound, there may be employed for example salts of polyacrylic acid, salts of maleic acid copolymers, polyacrylamides, polyethyleneimines, water-soluble urea resins, polyvinyl alcohol, polyether derivatives, poly(meth)acrylic acid derivatives and so on. Among them, polyether derivatives which have higher affinity to the compounds of the general formulae I to III may be preferred.

It is possible to incorporate, upon requirement, in the aqueous lubricant compositions according to the present invention other conventional additives such as, for example, extreme pressure agents, lubricants, antifoaming agents, antioxidants, corrosion inhibitors, metal chelating agents and so on.

Among the polyether compounds represented by the formulae I and II, those having limited molecular structures exhibit definite thickening effect within a limited range. While, for example, a compound obtained by adding 9 moles of ethylene oxide to one mole of oleyl alcohol shows a thickening ability, this thickening effect appears only within a limited range in the vicinity of the cloud point (35°C) of the aqueous solution thereof and, thus, it cannot be employed for the base formulation of an aqueous lubricant.

While compositions composed from the polyether compounds represented by the general formulae I and II exhibit relatively high cloud points and superior thickening effects over a wide temperature range, they have yet a shortcoming that the change in viscosity with temperature is relatively great, so that the use thereof for an aqueous lubricant is restricted.

It is known that an aliphatic alkanolamide such as a 1:2 condensation product of oleic acid with diethanolamine which is one of the amide compounds expressed by the general formula III has a superior thickening effect. However, the viscosity variation with temperature of the aqueous composition prepared

from this product is too high and the stability of the aqueous solution thereof upon storage is also inferior, so that this product is not satisfactory for use for the base formulation of an aqueous lubricant.

It is also known that alkylene oxide adducts of an alkanolamide of a fatty acid exhibit an improved storage stability with some thickening effect and lower change in viscosity with temperature than for an alkanolamide of the fatty acid, the thickening effect is decreased considerably, so that they are not suitable, alone, for the base formulation of an aqueous lubricant.

In contrast thereto, the aqueous lubricant compositions according to the present invention in which the polyether compounds represented by the general formulae I and II are combined together with the amide compound expressed by the general formula III exhibit excellent stability against shearing stress and have superior thickening property with very low viscosity variation with temperature, and also have excellent storage stability. The lubricant compositions can be used for many applications, for example, as hydraulic fluids, metal drawing as well as cutting fluids, and press oils. High performance is attained even when the water content is over 80% by weight.

The following two Preparations illustrate how compounds of formulae I and II, respectively, may be prepared.

Preparation 1

In a 50 l gas-tight reaction vessel, there were placed 10.7 kg (40 moles) oleyl alcohol and 53 g potassium hydroxide (catalyst). 15.8 kg (360 moles) ethylene oxide were introduced, to cause addition polymerisation, in a nitrogen gas atmosphere, at 90 to 130 C, under a superatmospheric pressure of 0.7 to 5.0 kg/cm$^2$. 26.5 kg of crude polyoxyethylene glycol monooleyl ether were obtained. The potassium hydroxide in the crude reaction product was neutralised with aqueous hydrochloric acid; water was then removed under reduced pressure (50 mmHg or lower) at 80 to 120 C for two hours. 25.5 kg of refined product were obtained after filtering off the precipitated salt.

Preparation 2

620 g (10 moles) ethylene glycol and 70 g potassium hydroxide (catalyst) were placed in a 50 l gas-tight reaction vessel. They were reacted with 19.4 kg (440 moles) ethylene oxide and 11.6 kg (200 moles) propylene oxide, in a nitrogen atmosphere, at 90 to 120 C, under a superatmospheric pressure of 0.5 to 5.0 kg/cm$^2$, to cause block-wise addition polymerisation. 31.0 kg of crude polyoxyethylenepolyoxypropylene glycol (block polymer) were obtained. By performing the after-treatment as in Preparation 1, 31 kg of refined product were obtained.

The following Examples 1, 3 to 7, 20 and 21 illustrate the invention. Examples 2, 8 to 19, 22 and 23 are comparative.

Examples 1 to 19

Aqueous lubricant compositions were prepared, having the formulations and properties, i.e. cloud point, thickening effect, storage stability and shear stability, given in Table 1.

The symbol IIIa represents a compound of formula III, which is either a reaction product of a lower alcohol ester of a carboxylic acid with a substantially equivalent amount of an alkanolamine or an adduct of this reaction product with ethylene oxide or with propylene oxide. The symbol IIIb denotes a compound of general formula III, which is a reaction product of one mole of a carboxylic acid with two moles of an alkanolamine. The symbol IV represents another water-soluble compound, as explained above. Structural formulae without symbols are of compounds which are not of formulae I, II and III. The prefix i in the structural formulae in Table 1 indicates that the compound has a branched structure. ($C_4H_8O$) indicates a butylene oxide unit. The segment enclosed within {} exists in a random polymerisation chain and others consist of block polymer chain.

"Indeterminable", as a record of kinematic viscosity, means that no homogeneous solution was obtained at the temperature of determination.

The storage stability was estimated by observing the turbidity after storage in a thermostat at 5 C for 24 hours; ○ means complete transparency, △ means turbidity, and × means phase separation.

The stability against shearing stress was determined using an ultrasonic shear stability tester (output 150 W at 10 KHz). The solution to be tested was subjected to ultrasonic wave irradiation at a temperature of 40 C for an irradiation period of 60 minutes. The shear stability was calculated from $v_1/v_2$, wherein $v_1$ and $v_2$ are the kinematic viscosities at 25 C of the test solution respectively before and after the irradiation.

As is seen from Table 1, the use of any one compound of formulae I to III alone may result in a low cloud point, causing phase separation at high temperatures (see Example 8) or variation of viscosity with temperature and inferior storage stability (see Example 10), and thus is inadequate for the base formulation of an aqueous lubricant composition. In contrast thereto, by combining the three components of formulae I to III, as in Examples 1 to 7, variation of viscosity with temperature was almost completely avoided, superior storage stability was attained, and there was no reduction in viscosity due to shearing stress, in contrast to the case of conventional high molecular weight thickening agents (see Example 18), so that they are very suitable for aqueous lubricants.

TABLE 1

| Example | Composition | | | Cloud Pt. (°C) | Kinematic viscosity (cSt) | | | Storage stability | Shear stability |
|---|---|---|---|---|---|---|---|---|---|
| No. | Structure | | Wt.-% | | 40°C | 25°C | 10°C | | |
| 1 | $C_{18}H_{35}O(C_2H_4O)_9H$<br>$i{-}C_{18}H_{37}O(C_3H_6O)_5(C_2H_4O)_{12}H$<br>$HO(C_3H_6O)_{10}(C_2H_4O)_{45}(C_3H_6O)_{10}H$<br>$C_{17}H_{33}CON(C_2H_4OH)_2$<br>Water | (I)<br>(I)<br>(II)<br>(IIIb) | 2.0<br>1.0<br>1.0<br>2.0<br>94.0 | 85 | 30.7 | 26.2 | 24.8 | ○ | 1.01 |
| 2 | $C_9H_{19}-$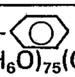$-O(C_2H_4O)_{18}H$<br>$HO(C_3H_6O)_{75}(C_2H_4O)_{80}(C_3H_6O)_{75}H$<br>$C_{11}H_{23}CON{<}\begin{smallmatrix}(C_2H_4O)_5H\\(C_2H_4O)_5H\end{smallmatrix}$<br>Water | (I)<br>(II)<br>(IIIa) | 3.0<br>3.0<br>4.0<br>90.0 | over 90 | 35.9 | 40.1 | 48.8 | ○ | 0.99 |
| 3 | $C_6H_{13}O(C_2H_4O)_2(C_3H_6O)H$<br>$CH_2O(C_2H_4O)_{200}(C_3H_6O)_{30}H$<br>$CHO(C_2H_4O)_{200}(C_3H_6O)_{30}H$<br>$CH_2O(C_2H_4O)_{200}(C_3H_6O)_{30}H$<br>$C_{17}H_{33}CON{<}\begin{smallmatrix}(C_2H_4O)_{17}H\\C_2H_5\end{smallmatrix}$<br>Water | (I)<br>(II)<br>(IIIa) | 5.0<br>20.0<br>5.0<br>70.0 | over 90 | 89.8 | 81.2 | 71.9 | ○ | 0.98 |
| 4 | $C_{12}H_{25}O(C_3H_6O)_{50}(C_2H_4O)_{50}(C_3H_6O)_{50}H$<br>$HO(C_3H_6O)_{30}(C_2H_4O)_{100}(C_3H_6O)_{30}H$<br>$C_{15}H_{31}CON(C_3H_6OH)_2$<br>Water | (I)<br>(II)<br>(IIIb) | 2.0<br>4.0<br>3.0<br>91.0 | 86 | 41.9 | 48.5 | 38.6 | ○ | 1.00 |
| 5 | $C_{18}H_{35}O(C_2H_4O)_8H$<br>$i{-}C_{20}H_{41}O(C_3H_6O)_{21}(C_2H_4O)_{40}(C_3H_6O)_{40}H$<br>$HO(C_4H_8O)_2(C_2H_4O)_{10}(C_4H_8O)_2H$<br>$C_{11}H_{23}CON{<}\begin{smallmatrix}(C_2H_4O)_2C_3H_6OH\\(C_2H_4O)_2C_3H_6OH\end{smallmatrix}$<br>Water | (I)<br>(I)<br>(II)<br>(IIIa) | 3.0<br>1.0<br>1.0<br>1.0<br>94.0 | 77 | 27.8 | 23.5 | 20.0 | ○ | 1.02 |

TABLE 1 (cont.-1)

| Example | Composition | | | Cloud Pt. (°C) | Kinematic viscosity (cSt) | | | Storage stability | Shear stability |
|---|---|---|---|---|---|---|---|---|---|
| No. | Structure | | Wt.-% | | 40°C | 25°C | 10°C | | |
| 6 | $C_8H_{17}O(C_4H_8O)_{30}(C_2H_4O)_{50}H$<br>$HO(C_3H_6O)_{20}\{(C_3H_6O)_{10}(C_2H_4O)_{40}\}(C_3H_6O)_{20}H$<br>$C_7H_{15}CON{<}^{C_2H_4OH}_{C_8H_{17}}$<br>Water | (I)<br>(II)<br>(IIIa)<br> | 2.0<br>2.0<br>2.0<br>94.0 | 65 | 20.0 | 18.8 | 15.3 | ○ | 1.01 |
| 7 | $C_{20}H_{41}O(C_3H_6O)_{20}(C_2H_4O)_{120}(C_3H_6O)_{40}H$<br>$C[CH_2O(C_2H_4O)_{100}(C_3H_6O)_{50}H]_4$<br>$C_{17}H_{33}CON(C_2H_4OH)_2$<br>$HO(C_2H_4O)_{250}(C_3H_6O)_{50}H$<br>Water | (I)<br>(II)<br>(IIIb)<br>(IV)<br> | 1.0<br>2.0<br>2.0<br>5.0<br>90.0 | 89 | 34.1 | 30.3 | 27.9 | ○ | 1.00 |
| 8 | $C_{18}H_{35}O(C_2H_4O)_9H$<br>Water | (I)<br> | 5.0<br>95.0 | 35 | (indeter-minable) | 10.3 | 3.5 | ○ | 0.98 |
| 9 | $HO(C_3H_6O)_{10}(C_2H_4O)_{45}(C_3H_6O)_{10}H$<br>Water | (II)<br> | 5.0<br>95.0 | 57 | 1.21 | 1.09 | 0.99 | ○ | 0.98 |
| 10 | $C_{17}H_{33}CON(C_2H_4OH)_2$<br>Water | (IIIb)<br> | 5.0<br>95.0 | over 90 | 27.6 | 57.9 | 145.0 | × | 0.96 |
| 11 | $C_{18}H_{35}O(C_2H_4O)_9H$<br>$i{-}C_{18}H_{37}O(C_3H_6O)_5(C_2H_4O)_{12}H$<br>Water | (I)<br>(I)<br> | 3.0<br>2.0<br>95.0 | 55 | 37.3 | 15.4 | 4.6 | ○ | 1.01 |
| 12 | $C_{12}H_{25}O(C_3H_6O)_2(C_2H_4O)_9(C_3H_6O)_2H$<br>$HO(C_4H_8O)_2(C_2H_4O)_{46}(C_4H_8O)_2H$<br>$C_{11}H_{23}CON{<}^{(C_2H_4O)_5H}_{(C_2H_4O)_5H}$<br>Water | (I)<br><br>(IIIa)<br> | 3.0<br>5.0<br>2.0<br>90.0 | over 90 | 4.7 | 8.3 | 17.8 | ○ | 0.99 |

TABLE 1 (cont.-2)

| Example No. | Composition: Structure | | Composition: Wt.-% | Cloud Pt. (°C) | Kinematic viscosity (cSt) 40°C | 25°C | 10°C | Storage stability | Shear stability |
|---|---|---|---|---|---|---|---|---|---|
| 13 | $C_4H_9O(C_2H_4O)_5H$<br>$HO(C_3H_6O)_{10}(C_2H_4O)_{45}(C_3H_6O)_{10}H$<br>$C_{11}H_{23}CON{-}(C_2H_4O)_5H$<br>$\quad{-}(C_2H_4O)_5H$<br>Water | <br>(II)<br>(IIIa) | 2.0<br>3.0<br>2.0<br>93.0 | over 90 | 3.5 | 7.8 | 13.1 | ○ | 1.01 |
| 14 | $C_{18}H_{35}O(C_2H_4O)_9H$<br>$HO(C_3H_6O)_{50}(C_2H_4O)_{30}(C_3H_6O)_{50}H$<br>$C_{11}H_{23}CON{-}(C_2H_4O)_2H$<br>$\quad{-}(C_2H_4O)_2H$<br>Water | (I)<br><br>(IIIa) | 2.0<br>3.0<br>2.0<br>93.0 | (No homogeneous solution was formed) | | | | | |
| 15 | $C_{18}H_{35}O(C_3H_6O)_{30}(C_2H_4O)_{200}H$<br>$HO(C_3H_6O)_2(C_2H_4O)_4(C_3H_6O)_2H$<br>$C_{11}H_{23}CON{-}(C_2H_4O)_2H$<br>$\quad{-}(C_2H_4O)_2H$<br>Water | <br><br>(IIIa) | 2.0<br>2.0<br>2.0<br>94.0 | over 90 | 1.6 | 3.9 | 7.3 | ○ | 1.03 |
| 16 | $C_{18}H_{35}O(C_3H_6O)_{10}(C_2H_4O)_5(C_3H_6O)_{10}H$<br>$HO(C_3H_6O)_{10}(C_2H_4O)_{45}(C_3H_6O)_{10}H$<br>$C_{11}H_{23}CON{-}(C_2H_4O)_{25}H$<br>$\quad{-}(C_2H_4O)_{25}H$<br>Water | <br>(II) | 3.0<br>3.0<br>4.0<br>90.0 | (No homogeneous solution was formed) | | | | | |
| 17 | $C_{12}H_{25}O(C_2H_4O)_6H$<br>$HO(C_3H_6O)_{10}(C_2H_4O)_{45}(C_3H_6O)_{10}H$<br>$C_5H_{11}CON{-}(C_2H_4O)_2H$<br>$\quad{-}(C_2H_4O)_2H$<br>Water | (I)<br>(II) | 1.0<br>3.0<br>1.0<br>95.0 | over 90 | 2.5 | 6.1 | 10.3 | ○ | 1.00 |
| 18 | Polyethylene oxide having average mol. weight of $2.5\times10^5$<br>Water | | 5.0<br>95.0 | over 90 | 9.7 | 56.1 | 212 | ○ | 0.63 |
| 19 | $HO(C_2H_4O)_{250}(C_3H_6O)_{50}H$<br>Water | | 5.0<br>95.0 | over 90 | 1.68 | 3.5 | 5.7 | ○ | 1.00 |

Examples 20 to 23

Water-based hydraulic fluids were prepared by dissolving in 100 parts by weight of each of the compositions of Examples 1, 4, 10 and 18 the following additive mixture:

| Additive mixture | |
|---|---|
| Oleic acid | 1.0 part by weight |
| Potassium hydroxide | 0.2 " |
| Morpholine | 0.2 " |
| Benzotriazole | 0.1 " |
| Antifoaming agent (KM-84 of Shinetsu Chem. Ind. Co.) | 0.01 " |

Using these water-based hydraulic fluids, pumping tests were carried out under the conditions:

| | |
|---|---|
| Hydraulic pump: | V-104C vane pump of Sperry Vickers Co. |
| Fluid volume: | 80 l |
| Discharge pressure: | 70 $Kg/cm^2$ |
| Pump revolution rate: | 1,200 r.p.m. |
| Test duration: | 100 hr. |
| Fluid temperature: | 50°C |

The results of the Tests are summarized in Table 2. In Table 2, the viscosity ratio is defined by the equation

$$\text{Viscosity Ratio} = v_2'/v_1'$$

wherein $v_1'$ and $v_2'$ denote the kinematic viscosities of the fluid before and after the test respectively.

As is clear from Table 2, using the aqueous lubricant compositions according to the present invention, the rate of wear of the pump is low with complete exclusion of occurrence of sludge and the kinematic viscosity as well as the viscosity ratio scarcely vary during operation.

TABLE 2

| Example No. | Wear of pump (mg) at | | | Occurrence of sludge | Kinematic viscosity (40°C, cSt) | | Viscosity ratio (40°C) |
|---|---|---|---|---|---|---|---|
| | Cam ring | Vane | Total | | Before test | After test | |
| 20 | 354 | 105 | 459 | none | 31.3 | 31.3 | 1.00 |
| 21 | 240 | 91 | 331 | none | 42.9 | 42.6 | 0.99 |
| 22 | 850 | 138 | 988 | some | 27.8 | 25.4 | 0.91 |
| 23 | 756 | 140 | 896 | some | 10.1 | 6.3 | 0.62 |

**Claims**

1. An aqueous lubricant composition comprising first and second polyether compounds and an amide compound, in which the first polyether compound has the formula

$$R^1Y[(C_pH_{2p}O)_a(C_2H_4O)_b(C_qH_{2q}O)_cH]_m$$

in which $R^1$ is $C_{5-26}$ hydrocarbyl; Y is oxygen and m is one or Y is nitrogen and m is 2; p and q are each either 3 or 4; the average values a, b and c are defined by $a \geqq 0$, $b \geqq 2$, $c \geqq 0$, $2 \leqq a+b+c \leqq 200$ and $0 \leqq (a+c)/b \leqq 7/3$; and wherein the ethyleneoxy groups and any of the other alkyleneoxy groups are each added in the form of block segments;

in which the second polyether compound has the formula

$$R^2[Y[\{(C_2H_4O)_d(C_pH_{2p}O)_e\}(C_qH_{2q}O)_fH]_m]_n$$

in which $R^2$ represents the residue of a polyhydric alcohol, a polyhydric phenol or a polyamine having 2 to

26 carbon atoms; Y, m, p and q are as defined above; n is an integer from 2 to 8; the average values d, e and f are defined by d>0, e≧0, f>0, 10≦d+e+f≦3000, 0≦e/d≦1 and 1/9≦f/(d+e)≦0.8; in which the chain segment within {} is a random addition chain if e is not 0, in which the or each chain segment enclosed in [] exists in the form of addition blocks arranged in the sequence given in the formula, and in which the content of $C_{3-4}$ oxyalkylene blocks is no more than 49.6%;

and in which the amide compound has the formula

$$R^3[CONR^4—(C_rH_{2r}O)_gH]_t$$

in which $R^3$ is hydrocarbyl derived from a $C_{8-54}$ carboxylic acid of the formula $R^3(COOH)_t$, $R^4$ is hydrogen, $C_{1-26}$ hydrocarbyl or $(C_sH_{2s}O)_hH$ and t is an integer from 1 to 5, wherein r and s are each either 2 or 3, and the average values of g and h are each from 1 to 20.

2. A composition according to claim 1, which comprises from 0.1 to 30% by weight of the first polyether compound, from 0.1 to 30% by weight of the second polyether compound, from 0.1 to 20% by weight of the amide compound, and from 20 to 99.7% by weight of water.

3. A composition according to claim 1 or claim 2, which additionally comprises a water-soluble compound having a number average molecular weight from 500 to 100,000.

4. A composition according to claim 3, which comprises from 0.1 to 25% by weight of the first polyether compound, from 0.1 to 25% by weight of the second polyether compound, from 0.1 to 20% by weight of the amide compound, from 0.1 to 10% by weight of the water-soluble compound, and from 20 to 99.6% by weight of water.

5. A composition according to claim 3 or claim 4, wherein the water-soluble compound is a polyalkylene glycol.

6. A composition according to any preceding claim, in the form of a water-based hydraulic fluid having a water content of from 80 to 99% by weight.

**Patentansprüche**

1. Wässrige Schmiermittelzusammensetzung, die erste und zweite Polyetherverbindungen und eine Amidverbindung umfaßt, in welcher die erste Polyetherverbindung die Formel

$$R^1Y[(C_pH_{2p}O)_a(C_2H_4O)_b(C_qH_{2q}O)_cH]_m$$

hat, in welcher $R^1$ $C_{5-26}$-Hydrocarbyl ist; Y Sauerstoff ist und m=1 ist, oder Y ist Stickstoff und m=2; p und qu sind jeweils 3 oder 4; die durchschnittlichen Werte a, b und c werden definiert durch a≧0, b≧2, c≧0, 2≦a+b+c≦200 und 0≦(a+c)/b≦7/3; und worin die Ethylenoxygruppen und irgendwelche anderen Alkylenoxygruppen jeweils in Form von Blocksegmenten addiert sind;

in welcher die zweite Polyetherverbindung die Formel

$$R^2[Y[\{(C_2H_4O)_d(C_pH_{2p}O)_e\}(C_qH_{2q}O)_fH]_m]_n$$

hat, in welcher $R^2$ den Rest eines mehrwertigen Alkohols, eines mehrwertigen Phenols oder eines Polyamins mit 2 bis 26 Kohlenstoffatomen bedeutet; Y, m, p und q sind wie oben definiert; n ist eine ganze Zahl von 2 bis 8; die durchschnittlichen Werte d, e und f werden definiert durch d>0, e≧0, f>0, 10≦d+e+f≦3000, 0≦e/d≦1 und 1/9≦f/(d+e)≦0,8; in welcher das Kettensegment innerhalb {} eine statistische Additionskette ist, wenn 2 nicht=0 ist, in welcher das oder jedes in [] eingeschlossene Kettensegment in Form von Additionsblöcken vorliegt, die in der in der Formel angegebenen Reihenfolge angeordnet sind, und in welcher der Gehalt an $C_{3-4}$-Oxyalkylenblöcken nicht mehr als 49,6% beträgt;

und in welcher die Amidverbindung die Formel

$$R^3[CONR^4—(C_rH_{2r}O)_gH]_t$$

hat, in welcher $R^3$ Hydrocarbyl, abgeleitet von einer $C_{8-54}$ Carbonsäure der Formel $R^3(COOH)_t$, ist, $R^4$ Wasserstoff, $C_{1-26}$-Hydrocarbyl oder $(C_sH_{2s}O)_hH$ bedeutet, und t eine ganze Zahl von 1 bis 5 ist, worin r und s jeweils 2 oder 3 sind und die durchschnittlichen Werte von g und j jeweils von 1 bis 20 betragen.

2. Zusammensetzung nach Anspruch 1, die 0,1 bis 30 Gew.-% der ersten Polyetherverbindung, 0,1 bis 30 Gew.-% der zweiten Polyetherverbindung 0,1 bis 20 Gew.-% der Amidverbindung und 20 bis 99,7 Gew.-% Wasser umfaßt.

3. Zusammensetzung nach Anspruch 1 oder 2, die zusätzlich eine wasserlösliche Verbindung mit einem Zahlenmittel des Molekulargewichts von 500 bis 100 000 umfaßt.

4. Zusammensetzung nach Anspruch 3, die 0,1 bis 25 Gew.-% der ersten Polyetherverbindung, 0,1 bis 25 Gew.-% der zweiten Polyetherverbindung, 0,1 bis 20 Gew.-% der Amidverbindung, 0,1 bis 10 Gew.-% der wasserlöslichen Verbindung und 20 bis 99,6 Gew.-% Wasser umfaßt.

5. Zusammensetzung nach Anspruch 3 oder 4, in welcher die wasserlösliche Verbindung ein Polyalkylenglykol ist.

6. Zusammensetzung nach irgendeinem vorhergehenden Anspruch in Form einer hydraulischen Flüssigkeit auf Wasserbasis mit einem Wassergehalt von 80 bis 99 Gew.-%.

**Revendications**

1. Une composition lubrifiante aqueuse comprenant un premier et un second polyéther et un amide, dans laquelle le premier polyéther répond à la formule

$$R^1Y[(C_pH_{2p}O)_a(C_2H_4O)_b(C_qH_{2q}O)_cH]_m$$

dans laquelle $R^1$ représente un groupe hydrocarboné en $C_5$—$C_{26}$; Y représente l'oxygène et m est égal à 1 ou bien Y représente l'azote et m est égal à 2; p et q sont chacun égaux à 3 ou 4; les valeurs moyennes de a, b et c sont définies par les relations $a \geqq 0$, $b \geqq 2$, $c \geqq 0$, $d \leqq a+b+c \leqq 200$ et $0 \leqq (a+c)/d \leqq 7/3$; et les groupes éthylène-oxy ainsi que les autres groupes éventuels alkylène-oxy sont chacun fixés par addition sous forme de segments de blocs;

le second polyéther répond à la formule

$$R^2[Y[\{(C_2H_4O)_d(C_pH_{2p}O)_e\}(C_qH_{2q}O)_fH]_m]_n$$

dans laquelle $R^2$ représente le reste d'un alcool polyhydrique, d'un phénol polyhydrique ou d'une polyamine contenant 2 à 26 atomes de carbone; Y, m, p et q ont les significations indiquées ci-dessus; n est un nombre allant de 2 à 8; les valeurs moyennes de d, e et f sont définies par les relations $d>0$, $e \geqq 0$, $f>0$, $10 \leqq d+e+f \leqq 3000$, $0 \leqq e/d \leqq 1$ et $1/9 \leqq f/(d+e) \leqq 0{,}8$; le segment de chaîne à l'intérieur des {} est une chaîne formée par addition statistique lorsque e n'est pas égal à 0, le segment de chaîne ou chacun des segments de chaîne à l'intérieur des [] existe sous la forme de blocs par addition disposés dans la séquence représentée dans la formule, et la teneur en blocs oxyalkylène en $C_3$—$C_4$ ne dépasse pas 49,6%;

et l'amide répond à la formule

$$R^3[CONR^4—(C_rH_{2r}O)_gH]_t$$

dans laquelle $R^3$ représente un groupe hydrocarboné dérivant d'un acide carboxylique en $C_8$—$C_{54}$ de formule $R^3(COOH)_t$, $R^4$ représente l'hydrogène, un groupe hydrocarboné en $C_1$—$C_{26}$ ou un groupe $(C_sH_{2s}O)_hH$ et t est un nombre allant de 1 à 5, r et s sont égaux chacun à 2 ou 3 et les valeurs moyennes de g et de h sont situées chacune entre 1 et 20.

2. Une composition selon la revendication 1, comprenant de 0,1 à 30% en poids du premier polyéther, de 0,1 à 30% en poids du second polyéther, de 0,1 à 20% en poids de l'amide et de 20 à 99,7% en poids d'eau.

3. Une composition selon la revendication 1 ou 2, contenant en outre un composé soluble dans l'eau présentant un poids moléculaire moyen, moyenne en nombre, de 500 à 100 000.

4. Une composition selon la revendication 3, comprenant de 0,1 à 25% en poids du premier polyéther, de 0,1 à 25% en poids du second polyéther, de 0,1 à 20% en poids de l'amide, de 0,1 à 10% en poids du composé soluble dans l'eau et de 20 à 99,6% en poids d'eau.

5. Une composition selon la revendication 3 ou 4, dans laquelle le composé soluble dans l'eau est un polyalkylèneglycol.

6. Une composition selon l'une quelconque des revendications qui précèdent, sous la forme d'un liquide hydraulique à base d'eau présentant une teneur en eau de 80 à 99% en poids.